# EUROPÄISCHE PATENTSCHRIFT

(11) **EP 1 702 138 B1**
(45) Veröffentlichungstag und Bekanntmachung des Hinweises auf die Patenterteilung: **23.05.2007**
(21) Anmeldenummer: 04802912.8
(22) Anmeldetag: 09.12.2004
(51) Int. Cl.: F01D 11/12, F01D 25/24, F01D 25/14, B22F 5/04, B22F 7/00, C22C 1/08, F16L 59/14

(54) **GASTURBINENBAUTEIL**
GAS TURBINE COMPONENT
COMPOSANT DE TURBINE A GAZ

(30) Priorität: 20.12.2003 DE 10360164
(43) Veröffentlichungstag der Anmeldung: 20.09.2006
(73) Patentinhaber: MTU Aero Engines GmbH, 80995 München (DE)
(72) Erfinder: MEIER, Reinhold, 84405 Dorfen (DE); STEINHARDT, Erich, 81377 München (DE)
(86) Internationale Anmeldenummer: PCT/DE2004/002706
(87) Internationale Veröffentlichungsnummer: WO 2005/061855

(56) Entgegenhaltungen:
- EP-A- 1 013 890
- EP-A- 1 186 748
- EP-A- 1 344 895
- EP-A- 1 391 597
- WO-A-03/054360
- DE-A1- 10 024 302
- GB-A- 793 886
- GB-A- 1 242 864
- US-A- 3 053 694
- US-A- 3 126 149
- US-A- 3 460 759
- US-A- 4 377 370
- US-A1- 2003 107 181
- US-A1- 2003 118 762
- US-A1- 2004 141 837
- US-B1- 6 652 222
- PATENT ABSTRACTS OF JAPAN Bd. 009, Nr. 003 (M-349), 9. Januar 1985 (1985-01-09) & JP 59 153902 A (HITACHI SEISAKUSHO KK), 1. September 1984 (1984-09-01)

## Beschreibung

Die Erfindung betrifft ein Gasturbinenbauteil, nämlich ein statisches Gasturbinenbauteil.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle.

Die wichtigsten, heutzutage für Flugtriebwerke oder sonstige Gasturbinen verwendeten Werkstoffe sind Titanlegierungen, Nickellegierungen (auch Superlegierungen genannt) und hochfeste Stähle. Die hochfesten Stähle werden zum Beispiel für Verdichtergehäuse und Turbinengehäuse verwendet. Titanlegierungen sind typische Werkstoffe für Verdichterteile. Nickellegierungen sind für die heißen Teile des Flugtriebwerks geeignet. Als Fertigungsverfahren für Gasturbinenbauteile aus Titanlegierungen, Nickellegierung oder sonstigen Legierungen sind aus dem Stand der Technik in erster Linie das Feingießen sowie Schmieden bekannt. Alle hochbeanspruchten Gasturbinenbauteile, wie zum Beispiel Bauteile für einen Verdichter, sind Schmiedeteile. Bauteile für eine Turbine werden hingegen in der Regel als Feingussteile ausgeführt.

Zur Reduzierung des Gewichts von Gasturbinenbauteilen ist es aus dem Stand der Technik bereits bekannt, Metallmatrix-Verbundwerkstoffe (sogenannte MMC-Werkstoffe) einzusetzen. Bei derartigen MMC-Werkstoffen sind hochfeste Fasern in den Metallwerkstoff eingelagert. Die Herstellung von Gasturbinenbauteilen aus derartigen MMC-Werkstoffen ist jedoch aufwendig und damit teuer.

Es liegt im Sinne der hier vorliegenden Erfindung, alternative Möglichkeiten zur Gewichtsreduzierung von statischen Gasturbinenbauteilen vorzuschlagen. Die Masse der statischen Gasturbinenbauteile beeinflusst nämlich das Gesamtgewicht einer Gasturbine, insbesondere eines Flugtriebwerks. Je stärker das Gewicht der Gasturbinenbauteile reduziert werden kann, desto günstiger fällt das sogenannte Schub-Gewichtsverhältnis des Flugtriebwerks aus, welches ein entscheidendes Wettbewerbsmerkmal für Flugtriebwerke darstellt.

EP 1013890 offenbart den Stand der Technik.

Hiervon ausgehend liegt der vorliegenden Erfindung das Problem zu Grunde, ein neuartiges statisches Gasturbinenbauteil vorzuschlagen.

Dieses Problem wird dadurch gelöst, dass das eingangs genannte Gasturbinenbauteil durch die Merkmale des kennzeichnenden Teils des Patentanspruchs 1 weitergebildet ist. Erfindungsgemäß ist das statische Gasturbinenbauteil zumindest teilweise aus einem Metallschaum gebildet. Im Sinne der hier vorliegenden Erfindung wird erstmals vorgeschlagen, statische Gasturbinenbauteile zumindest teilweise in Metallschaum auszuführen. Die Verwendung von Metallschäumen ermöglicht eine kostengünstige Alternative gegenüber MMC-Werkstoffen und eine deutliche Gewichtseinsparung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: ein Blockschaltbild zur Verdeutlichung eines Verfahrens zur Herstellung von erfindungsgemäßen Gasturbinenbauteilen;
- Fig. 2: ein als Gehäusestruktur ausgebildetes, erfindungsgemäßes Gasturbinenbauteil nach einem ersten Ausführungsbeispiel der Erfindung in stark schematisierter Darstellung;
- Fig. 3: ein als Gehäusestruktur ausgebildetes, erfindungsgemäßes Gasturbinenbauteil nach einem zweiten Ausführungsbeispiel der Erfindung in stark schematisierter Darstellung;
- Fig. 4: ein als Gehäusestruktur ausgebildetes, erfindungsgemäßes Gasturbinenbauteil nach einem dritten Ausführungsbeispiel der Erfindung in stark schematisierter Darstellung;
- Fig. 5: ein als Einlaufbelag ausgebildetes, erfindungsgemäßes Gasturbinenbauteil nach einem weiteren Ausführungsbeispiel der Erfindung in stark schematisierter Darstellung;
- Fig. 6: ein als Einlaufbelag ausgebildetes, erfindungsgemäßes Gasturbinenbauteil nach einem weiteren Ausführungsbeispiel der Erfindung in stark schematisierter Darstellung;
- Fig. 7: ein als Einlaufbelag ausgebildetes, erfindungsgemäßes Gasturbinenbauteil nach einem weiteren Ausführungsbeispiel der Erfindung in stark schematisierter Darstellung;
- Fig. 8: ein als Einlaufbelag ausgebildetes, erfindungsgemäßes Gasturbinenbauteil nach einem weiteren Ausführungsbeispiel der Erfindung in stark schematisierter Darstellung;
- Fig. 9: ein als Rohrleitungssystem ausgebildetes, erfindungsgemäßes Gasturbinenbauteil nach einem weiteren Ausführungsbeispiel der Erfindung in stark schematisierter Darstellung;
- Fig. 10: ein als Rohrleitungssystem ausgebildetes, erfindungsgemäßes Gasturbinenbauteil nach einem weiteren Ausführungsbeispiel der Erfindung in stark schematisierter Darstellung;
- Fig. 11: ein als Rohrleitungssystem ausgebildetes, erfindungsgemäßes Gasturbinenbauteil nach einem weiteren Ausführungsbeispiel der Erfindung in stark schematisierter Darstellung;
- Fig. 12: e ein als Rohrleitungssystem ausgebildetes, erfindungsgemäßes Gasturbinenbauteil nach einem weiteren Ausführungsbeispiel der Erfindung in stark schematisierter Darstellung; und
- Fig. 13: ein als Rohrleitungssystem ausgebildetes, erfindungsgemäßes Gasturbinenbauteil nach einem weiteren Ausführungsbeispiel der Erfindung in stark schematisierter Darstellung.

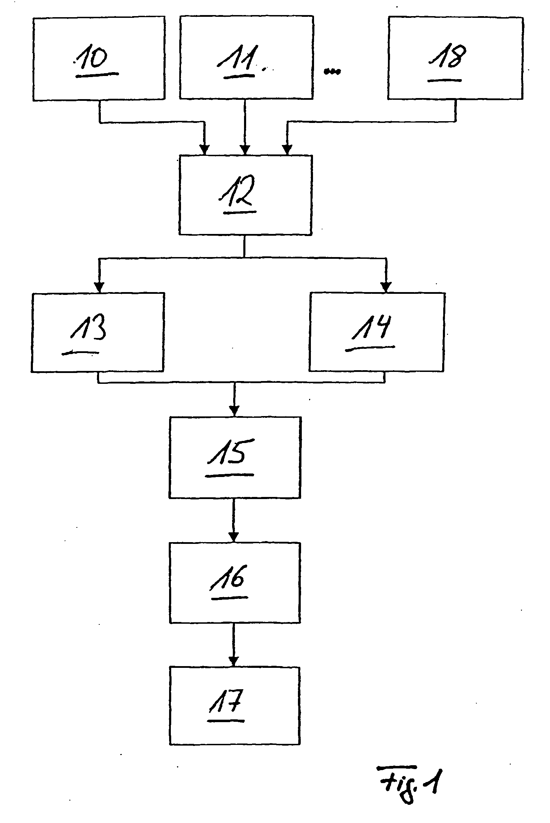

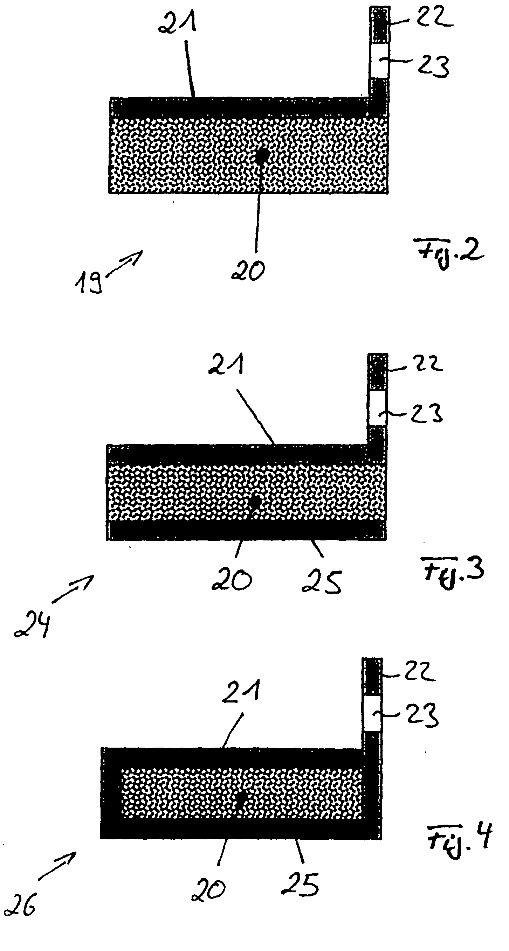

Die hier vorliegende Erfindung wird nachfolgend unter Bezugnahme auf Fig. 1 bis 13 in größerem Detail beschrieben, wobei Fig. 2 bis 13 jeweils erfindungsgemäße Gasturbinenbauteile stark schematisiert zeigen. Bevor jedoch auf die Details der erfindungsgemäßen Gasturbinenbauteile eingegangen wird, sollen vorab unter Bezugnahme auf Fig. 1 Schritte eines bevorzugten Herstellungsverfahrens für statische Gasturbinenbauteile aus Metallschaum beschrieben werden.

Zur Herstellung eines erfindungsgemäßen, statischen Gasturbinenbauteils für ein Flugtriebwerk wird gemäß Fig. 1 so vorgegangen, dass in einem ersten Schritt 10 ein Metallpulver und in einem zweiten Schritt 11 ein Treibmittel bereitgestellt werden. Bei dem bereitgestellten Metallpulver handelt es sich um ein Metallpulver auf Basis einer Aluminiumlegierung oder Titanlegierung oder Nickellegierung. Es ist auch möglich, Metallpulver auf Basis einer Kobaltlegierung oder einer Eisenlegierung zu verwenden. Des weiteren können Metallpulver aus intermetallischen Titan-Aluminium-Legierungen verwendet werden. Als Treibmittel wird insbesondere Titanhydrid bereitgestellt.

Das bereitgestellte Metallpulver sowie das bereitgestellte Treibmittel werden in einem Schritt 12 gemischt. Die sich nach dem Mischen ergebende Mischung aus Metallpulver und Treibmittel wird sodann zu einem Halbzeug verdichtet. Das Verdichten kann entweder im Sinne des Schritts 13 durch Strangpressen oder im Sinne des Schritts 14 durch axiales Heißpressen erfolgen. Am Ende der Verdichtung gemäß Schritt 13 oder Schritt 14 liegt demnach ein Halbzeug vor, was im Abflussdiagramm der Fig. 1 durch den Schritt 15 visualisiert ist. Das Halbzeug ist äußerlich von einem herkömmlichen Metall so gut wie nicht zu unterscheiden, es enthält jedoch das Treibmittel und ist daher aufschäumbar.

Zur Herstellung des Gasturbinenbauteils wird das im Schritt 15 vorliegende Halbzeug im Sinne des Schritts 16 erwärmt, und zwar bis knapp über seinen Schmelzpunkt, sodass das Metall geschmolzen wird und eine Gasfreisetzung des Treibmittels erfolgt. Durch die Gasfreisetzung des Treibmittels wird die Aufschäumung des Halbzeugs ausgelöst. Das Aufschäumen wird solange durchgeführt, bis ein definierter Schäumungsgrad erreicht ist. Sobald dieser definierte Schäumungsgrad erreicht ist, wird die Aufschäumung dadurch beendet, dass eine Abkühlung unter den Schmelzpunkt des verwendeten Metallpulvers erfolgt. Hierdurch wird die Schaumstruktur stabilisiert. Das durch die Erwärmung des Halbzeugs über den Schmelzpunkt des Metallpulver ausgelöste Aufschäumen sowie das entsprechende Beenden der Aufschäumung durch Abkühlung unter den Schmelzpunkt des Metallpulvers sind gemeinsam durch den Schritt 16 visualisiert. Im Anschluss an den Schritt 16 kann noch eine Oberflächenbearbeitung oder sonstige Bearbeitung bzw. Veredlung des hergestellten Bauteils im Sinne des Schritts 17 erfolgen. So kann das Bauteil zum Beispiel mit einem Träger verbunden werden.

Weiterhin zeigt Fig. 1, dass im Sinne eines Schritts 18 zusätzlich zu dem in Sinne des Schritts 10 bereitgestellten Metallpulver und dem im Sinne des Schritts 11 bereitgestellten Treibmittels weitere Bestandteile mit dem Metallpulver und dem Treibmittel im Schritt 12 vermischt werden können. Bei den weiteren Bestandteilen kann es sich zum Beispiel um ein zusätzliches Metallpulver mit unterschiedlichem Schmelzpunkt oder unterschiedlicher Pulverkörnung, um ein unterschiedliches Treibmittel oder auch um Keramikpartikel, Keramikfasern oder sonstige anorganische oder organische Elemente handeln.
Fig. 2 zeigt ein erstes Ausführungsbeispiel eines erfindungsgemäßen Gasturbinenbauteils, welches eine Gehäusestruktur 19 bildet, wobei die Gehäusestruktur 19 zumindest bereichsweise aus Metallschaum gebildet ist. Die Gehäusestruktur 19 der Fig. 2 verfügt über einen ersten Abschnitt bzw. Bereich 20, der aus Metallschaum gebildet ist, und einen zweiten Bereich 21, der als Träger für den Metallschaum dient. Im Ausführungsbeispiel der Fig. 2 ist der Träger 21 auf einer Seite des Metallschaums 20 angeordnet, wobei der Metallschaum 20 mit dem Träger 21 fest verbunden ist. Träger 21 und Metallschaum 20 bilden im Ausführungsbeispiel der Fig. 2 eine einfache Sandwichstruktur. Der Träger 21 verfügt des weiteren über einen abgewinkelten Abschnitt 22, wobei der Abschnitt 22 zur Verbindung mit anderen Bauteilen eine Bohrung 23 aufweist.

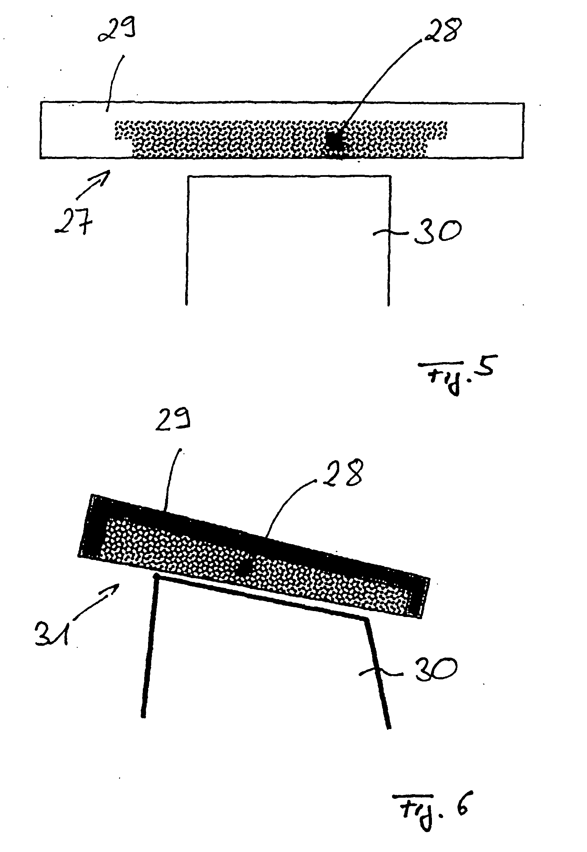

Fig. 3 zeigt ebenfalls ein als Gehäusestruktur 24 ausgebildetes, erfindungsgemäßes Gasturbinenbauteil, wobei sich das Ausführungsbeispiel der Fig. 3 vom Ausführungsbeispiel der Fig. 2 dadurch unterscheidet, dass zu beiden Seiten des Metallschaums 20 ein als Träger ausgebildeter Abschnitt bzw. Bereich 21 sowie 25 angeordnet und mit dem Metallschaum 20 fest verbunden ist. Die Anordnung der Fig. 3 kann auch als doppelte SandwichBauweise bezeichnet werden. Die Träger 21 sowie 25 zu beiden Seiten des Metallschaums 20 können aus gleichen oder unterschiedlichen Werkstoffen, nämlich Metalllegierungen, bestehen.

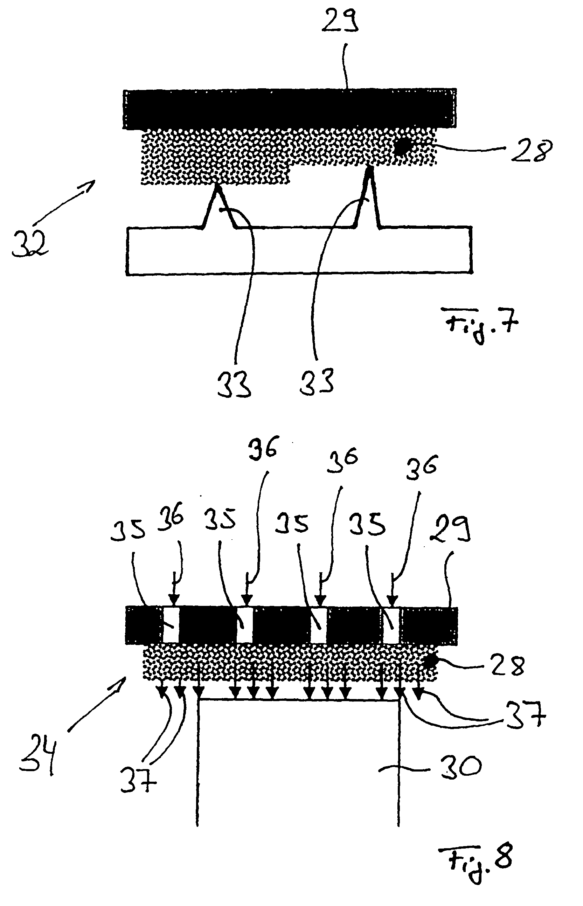

Im Ausführungsbeispiel der Fig. 4 ist ein weiteres, als Gehäusestruktur 26 ausgebildetes, erfindungsgemäßes Gasturbinenbauteil gezeigt, welches ebenfalls bereichsweise aus Metallschaum 20 gebildet ist, wobei der Metallschaum 20 im Ausführungsbeispiel der Fig. 4 allseitig von als Träger ausgebildeten Abschnitten bzw. Bereichen umgeben ist.

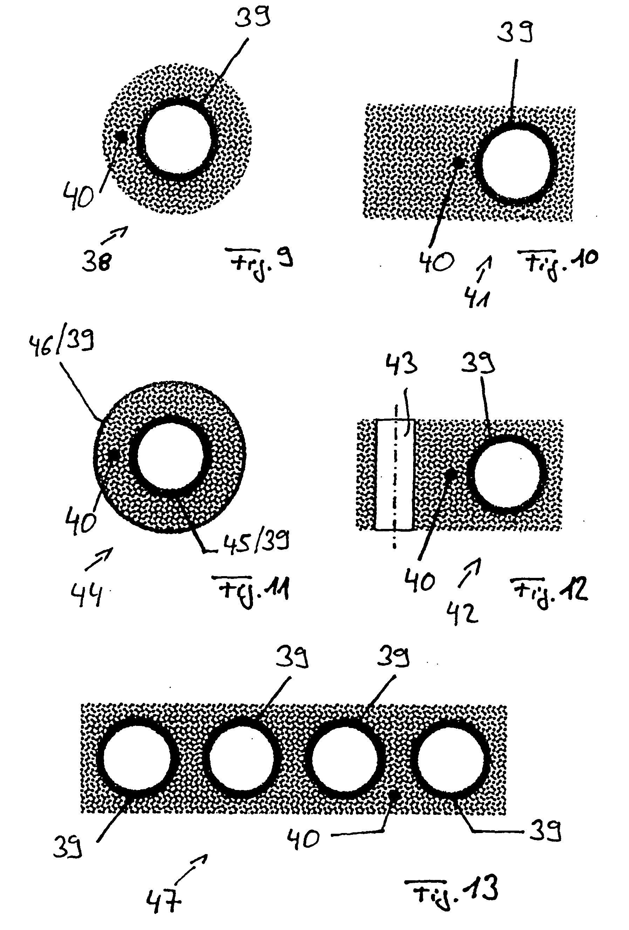

Fig. 5 bis 8 zeigen Ausführungsbeispiele erfindungsgemäßer, statischer Gasturbinenbauteile, bei welchen die erfindungsgemäßen Bauteile einen Einlaufbelag bilden. So zeigt Fig. 5 einen ersten erfindungsgemäßen Einlaufbelag 27, der aus einem Metallschaum 28 gebildet ist, wobei der Metallschaum 28 mit einem Träger 29 fest verbunden ist. Der Einlaufbelag 28 dient dem verschleißfreien bzw. verschleißarmen Anstreifen einer rotierenden Laufschaufel 30 der Gasturbine. Der Einlaufbelag 27 steht gegenüber der rotierenden Laufschaufel 30 fest und bildet demnach ein statisches Gasturbinenbauteil.

Fig. 6 zeigt einen weiteren Einlaufbelag 31, der wiederum aus einem Metallschaum 28 und einem mit dem Metallschaum 28 fest verbundenen Träger 29 gebildet wird. Auch der Einlaufbelag 31 der Fig. 6 dient dem Anstreifen radial außenliegender Enden rotierender Laufschaufeln der Gasturbine, wobei beim Einlaufbelag 31 der Fig. 6 der Träger 29 eine thermische Isolationsfunktion übernimmt.

Fig. 7 zeigt einen weiteren erfindungsgemäßen Einlaufbelag 32, der wiederum aus einem Metallschaum 28 und einem dem Metallschaum 28 zugeordneten, sowie fest mit dem Metallschaum 28 verbundenen Träger 29 besteht. Der statische bzw. feststehende Einlaufbelag 32 der Fig. 7 wirkt mit Labyrinthdichtungen 33 zusammen, die auch als Dichtfins bezeichnet werden. Derartige Dichtfins verfügen, wie dies in Fig. 7 schematisiert dargestellt ist, über unterschiedliche Außenradien, sodass der vom Metallschaum 28 bereitgestellte Einlaufbelag 32 über eine abgestufte Kontur verfügt. Der Innendurchmesser des vom Metallschaum 28 bereitgestellten Einlaufbelags 32 ist an den Außendurchmesser der Labyrinthdichtungen 33 angepasst. Es sei angemerkt, dass die Ausführung des Einlaufbelags 32 gemäß Fig. 7 eine besonders bevorzugte Ausführungsform der hier vorliegenden Erfindung ist, da mit einem derartigen Metallschaum-Einlaufbelag, der mit Labyrinthdichtungen zusammenwirkt, die aus dem Stand der Technik bekannte Honigwaben-Konstruktion des Einlaufbelags ersetzt werden kann. Wie bereits erwähnt, ist der Metallschaum 28 mit dem Träger 29 fest verbunden, insbesondere verklebt oder verlötet.

Fig. 8 zeigt einen weiteren erfindungsgemäßen Einlaufbelag 34, der wiederum aus einem Metallschaum 28 und einem Träger 29 für den Metallschaum gebildet ist. Im Ausführungsbeispiel der Fig. 8 sind in den Träger 29 Öffnungen bzw. Bohrungen 35 eingebracht. Durch die Bohrungen 35 kann im Sinne der Pfeile 36 zur Kühlung eine Gasströmung geleitet werden, wobei in diesem Fall der Metallschaum 28 offenporig ausgebildet ist. Ein derartiger, offenporig ausgebildeter Metallschaum 28 kann von Gas durchströmt werden. Dies ist durch die Pfeile 37 verdeutlicht.

Fig. 9 bis 13 zeigen weitere bevorzugte Gasturbinenbauteile, die bereichsweise aus Metallschaum gebildet sind, wobei alle in Fig. 9 bis 13 gezeigten Gasturbinenbauteile ein Rohrleitungssystem bilden. Im Ausführungsbeispiel der Fig. 9 ist ein Rohrleitungssystem 38 gezeigt, wobei das Rohrleitungssystem 38 von einem geschlossenwandigen Rohr 39 gebildet wird, welches an seiner Außenseite konzentrisch von Metallschaum 40 umschlossen ist. Mit einem derartigen Rohrleitungssystem, welches bereichsweise aus Metallschaum besteht, können verbesserte Schwingungseigenschaften sowie thermische Isolationseigenschaften von Rohrleitungssystemen innerhalb von Gasturbinen realisiert werden. So kann eine Entzündung bzw. Verkokung der Rohrleitungssysteme verhindert werden.

Fig. 10 zeigt eine Ausführungsform eines Rohrleitungssystems 41, wobei das Rohrleitungssystem 41 der Fig. 10 wieder von einem geschlossenwandigen Rohr 39 gebildet wird, welches auf der Außenseite von Metallschaum 40 umgeben ist. Fig. 10 verdeutlicht, dass der Metallschaum 40 auf der Außenseite des geschlossenwandigen Rohres 39 eine beliebige Form aufweisen kann.

Das in Fig. 12 dargestellte Rohrleitungssystem 42 unterscheidet sich vom Rohrleitungssystem 41 der Fig. 10 dadurch, dass in den Metallschaum 40 ein Befestigungsmittel 43 integriert ist. Im Sinne der Erfindung kann auf einfache Art und Weise ein Befestigungsmittel an das Rohr angeschäumt werden. Hierdurch wird die Verbindung mit anderen Bauteilen deutlich vereinfacht.

Fig. 11 zeigt ein erfindungsgemäßes Rohrleitungssystem 44, welches wiederum bereichsweise aus Metallschaum gebildet ist. Im Ausführungsbeispiel der Fig. 11 ist wiederum ein geschlossenwandiges Rohr 39 vorgesehen, wobei das Rohr 39 im Ausführungsbeispiel der Fig. 11 über eine geschlossene Innenwand 45 sowie eine geschlossene Außenwand 46 verfügt. Das Rohr 39 ist demnach im Ausführungsbeispiel der Fig. 11 doppelwandig ausgebildet. Zwischen den beiden Wänden 45 und 46 ist der Metallschaum 40 positioniert.

Ein weiteres Ausführungsbeispiel eines erfindungsgemäßen Rohrleitungssystems 47 zeigt Fig. 13, wobei das Rohrleitungssystem 47 der Fig. 13 vier geschlossenwandige Rohre 39 aufweist, die zusammen in einem Metallschaum 40 positioniert sind. Im Ausführungsbeispiel der Fig. 13 werden demnach mehrere Rohre 39 über den Metallschaum 40 zu einer integralen Einheit zusammengefasst.

An dieser Stelle sei darauf hingewiesen, dass durch die erfindungsgemäß ausgebildeten Rohrleitungssysteme der Fig. 9 bis 13 Gas, Öl oder auch Treibstoff geleitet werden kann.

Bei allen in Fig. 2 bis 13 gezeigten Ausführungsbeispielen eines erfindungsgemäßen Gasturbinenbauteils handelt es sich um statische Bauteile für Flugtriebwerke. Die erfindungsgemäßen Bauteile verfügen über ein minimiertes Gewicht, gute thermische Isolationseigenschaften und sind des weiteren kostengünstig herstellbar. Auftretende Schwingungen können über den Metallschaum sicher und gut gedämpft werden.

## Patentansprüche

1. Einlaufbelag (34) für eine Gasturbine zum verschleißarmen Anstreifen von gegenüber dem Einlaufbelag beweglichen Bauteilen, insbesondere Dichtfins, aus einem mit mindestens einem Träger (29) fest verbundenen Metallschaum (28), **dadurch gekennzeichnet, dass** der oder jeder Träger (29) Öffnungen bzw. Bohrungen (35) aufweist und der Metallschaum (28) offenporig ausgebildet ist, sodass sowohl der oder jeder Träger als auch der Metallschaum in radialer Richtung durchströmbar sind.

2. Einlaufbelag nach Anspruch 1, **dadurch gekennzeichnet, dass** der Metallschaum (28) über eine abgestufte Kontur verfügt.

3. Einlaufbelag nach Anspruch 1 oder 2, **dadurch gekennzeichnet, dass** der Metallschaum (28) mit dem Träger (29) fest verbunden, insbesondere verklebt oder verlötet ist.

## Claims

1. A running-in lining (34) for a gas turbine for the low-wear contact of components, in particular seal fins, which can move with respect to the running-in lining, consisting of a metal foam (28) which is firmly joined to at least one support (29), **characterised in that** the or each support (29) comprises openings or bores (35), and the metal foam (28) is of open-pored formation, so that a flow in the radial direction through both the or each support and the metal foam is possible.

2. A running-in lining according to Claim 1, **characterised in that** the metal foam (28) has a stepped contour.

3. A running-in lining according to Claim 1 or 2, **characterised in that** the metal foam (28) is firmly joined to the support (29), in particular glued or soldered.

## Revendications

1. Revêtement de rodage (34) pour une turbine à gaz, permettant l'effleurement à faible usure de composants mobiles par rapport au revêtement de rodage, en particulier de lames d'étanchéité, constitué d'une mousse métallique (28) reliée fixement à au moins un support (29),
**caractérisé en ce que**
le ou chaque support (29) présente des ouvertures ou des alésages (35) et la mousse métallique (28) est à pores ouverts de sorte qu'aussi bien le ou chaque support que la mousse métallique peuvent être traversés radialement.

2. Revêtement selon la revendication 1,
**caractérisé en ce que**
la mousse métallique (28) a un contour étagé.

3. Revêtement selon la revendication 1 ou 2,
**caractérisé en ce que**
la mousse métallique (28) est reliée fixement au support (29), en particulier collée ou brasée.
